(19) Europäisches Patentamt
European Patent Office
Office européen des brevets

(11) **EP 2 645 654 B1**

(12) **EUROPEAN PATENT SPECIFICATION**

(45) Date of publication and mention of the grant of the patent:
**03.08.2016 Bulletin 2016/31**

(21) Application number: **12174292.8**

(22) Date of filing: **29.06.2012**

(51) Int Cl.:
*H04L 25/06* [(2006.01)]   *H04L 27/20* [(2006.01)]
*H04L 27/38* [(2006.01)]   *H04L 27/34* [(2006.01)]

(54) **Method and Device for Demodulating Rotated Constellations**

Verfahren und Vorrichtung zur Demodulation gedrehter Konstellationen

Procédé et dispositif de démodulation de constellations rotatives

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.03.2012 EP 12162762**

(43) Date of publication of application:
**02.10.2013 Bulletin 2013/40**

(73) Proprietor: **IMEC**
**3001 Leuven (BE)**

(72) Inventor: **Li, Min**
**3001 Leuven (BE)**

(74) Representative: **Van Bladel, Marc et al**
**DenK iP bvba**
**Hundelgemsesteenweg 1114**
**9820 Merelbeke (BE)**

(56) References cited:
**WO-A1-2008/149082      WO-A1-2009/096842**

- **KYEONGYEON KIM ET AL: "One-dimensional soft-demapping using decorrelation with interference cancellation for rotated QAM constellations", CONSUMER COMMUNICATIONS AND NETWORKING CONFERENCE (CCNC), 2012 IEEE, IEEE, 14 January 2012 (2012-01-14), pages 787-791, XP032161029, DOI: 10.1109/CCNC.2012.6181165 ISBN: 978-1-4577-2070-3**
- **KITAEK BAE ET AL: "Low complexity two-stage soft demapper for rotated constellation in DVB-T2", CONSUMER ELECTRONICS (ICCE), 2012 IEEE INTERNATIONAL CONFERENCE ON, IEEE, 13 January 2012 (2012-01-13), pages 618-619, XP032125067, DOI: 10.1109/ICCE.2012.6162044 ISBN: 978-1-4577-0230-3**
- **MENG LI ET AL: "Design of rotated QAM mapper/demapper for the DVB-T2 standard", SIGNAL PROCESSING SYSTEMS, 2009. SIPS 2009. IEEE WORKSHOP ON, IEEE, PISCATAWAY, NJ, USA, 7 October 2009 (2009-10-07), pages 18-23, XP031568768, ISBN: 978-1-4244-4335-2**

EP 2 645 654 B1

**Description**

**Field of the invention**

The present invention is related to the field of demodulating digitally modulated signals, in particular signals having a rotated constellation such as e.g. rotated QAM symbols.

**Background of the invention**

Rotated constellations, i.e. constellations rotated with respect to the axes of the complex wherein the constellation points are contained, combined with Signal Space Diversity (SSD) have attracted a lot of interest in recent years as a new diversity technique. Rotated constellations have shown to bring substantial transmission benefit, especially under harsh channel conditions, like severe fading and/or erasure events. The technique has recently been introduced in the second generation of the terrestrial digital video broadcast standard DVB-T2 and 60GHz wireless communication standard. Several other standards, such as new generations of ATSC (Advanced Television Systems Committee) and DTMB (Digital Terrestrial Multimedia Broadcast), are also considering it.

In conventional QAM modulation, the I and Q signal components are transmitted simultaneously and carry each half of the binary information held in the signal. Thus, when a constellation signal is subject to fading, I and Q components fade identically. In the case of severe fading, the information transmitted on I and Q components suffers an irreversible loss. As the constellation points are located on a completely regular integer grid, the demodulation can be performed rather simply by quantization and look up tables.

The underlying idea of Signal Space Diversity is to transmit the whole binary content of each constellation signal twice and separately yet without loss of spectral efficiency. Actually, the two projections of the signal are sent separately in e.g. two different time periods, two different Orthogonal Frequency Division Multiplexing (OFDM) subcarriers or two different antennas, in order to benefit from time, frequency or antenna diversity, respectively. When concatenated with Forward Error Correcting (FEC) codes, simulations show that rotated constellations provide substantial advantage over conventional QAM on wireless channels. This concept can significantly improve the system performance in frequency selective terrestrial channels thanks to SSD. Indeed, SSD doubles the diversity order of the conventional Bit-Interleaved Coded Modulation (BICM) schemes and largely improves the fading performance, especially for high coding rates.

However, the performance improvements come at the cost of increased complexity. The complexity of soft demodulation with rotated constellations is order of magnitudes higher than that of ordinary constellations. Indeed, due to the rotation and separate transmission of I and Q branches, the regularity of the original QAM constellations does not exist anymore. Hence, the problem definition of soft demodulation becomes much more complex. Especially, very high order modulations have been defined in future standards, such as the 256-QAM mode defined in DVB-T2. Even 4096-QAM is being discussed for several other standards. Hence, efficient algorithms and implementations are crucial.

An important step in the demodulation is finding for each incoming symbol the most likely constellation point, i.e. the constellation point having the minimal distance to the received symbol. In a 'full search' algorithm, the distance between the received symbol to each possible constellation point is calculated, and the constellation point with the smallest distance is chosen. However, this requires a huge number of calculations, which is very time consuming and power consuming. Many proposed schemes are based on partial searching methods, which are still challenging for practical implementations. Meng Li et al. describe in "Design of rotated QAM mapper/demapper for the DVB-T2 standard" (IEEE Workshop on Signal Processing Systems, 2009, pp.018-023) a method based on a reduced search, which reduces the number of distance calculations with 60% for 64-QAM and 69% for 256 QAM. A prototype is implemented in a large programmable FPGA.

The paper *"One-Dimensional Soft-Demapping using Decorrelation with Interference Cancellation for Rotated QAM constellations"* (Kyeongyeon Kim et al., IEEE Consumer Communication and Networking Conference 2012, Jan.2012, pp.787 - 791) tackles the problem of exploiting signal space diversity to improve detection performance of QAM over fading channels, while avoiding the complexity increase of maximum likelihood detection. A one-dimensional soft demapping algorithm with decorrelation is presented. A received rotated QAM signal is thereby rewritten as two received PAM signals, which simplifies the ML detection for rotated QAM to a minimum MSE decorrelation followed by per channel soft-demapping.

Hence, there is a need for a more efficient method for the soft demodulation of digitally modulated signals.

**Summary of the invention**

It is an object of embodiments of the present invention to provide a method for demodulating signals with a rotated constellation, in a more efficient way. It is also an object to provide a method for demodulating rotated QAM signals in a way that is less complex. It is also an object to provide a solution whereby the need for extensive searching is avoided or at least reduced.

The above objectives are accomplished by the solution according to the present invention.

In a first aspect the invention relates to a method for demodulating a received digital data symbol, whereby the digital data symbol has been selected at the transmitter side for transmission over a communication channel from a set of constellation points rotated with respect to the complex plane axes. Typically a conventional QAM constellation is used that has undergone a small rotation. The method comprises the step of applying at least one geometrical transformation to the received digital data symbol, e.g. a data symbol vector, and to the set of candidate constellation points at the receiver side.

The proposed method indeed achieves the above-mentioned goals. By adopting a geometrical approach, the need for searching may be completely eliminated, or the search area may be drastically reduced to just a few points. The main advantage of the present invention lies in its low computational and conceptual complexity, and in the fact that it is easy to implement, since the data and control flow of the proposed scheme with geometrical transformations is rather regular.

In a preferred embodiment the method comprises a step of determining the closest points of the geometrically transformed set of possible constellation points at the receiver to the geometrically transformed received digital data symbol. More specifically, the step of determining is advantageously performed bit-by-bit, whereby a closest point is derived having a logical zero at a given position in the bit sequence and a closest point having a logical one at said given position. The step of determining may comprise a geometrical projection.

The method may comprise the use of trigonometric functions. The method may comprise using one or more of a sine function, a cosine function or an inverse tangent function. The method may make use of look-up tables or a memory, or may be calculated using formulas or by interpolation.

In an embodiment the performing the method consumes less power. In an embodiment the method can be implemented in a circuit requiring less silicon area.

In a preferred embodiment the at least one geometrical transformation is a translation or a rotation. In an embodiment the method comprises the steps of both translation and rotation, in any order. The method may also comprise other geometrical operations, such as geometrical projection.

Preferably the at least one geometrical transformation comprises moving, i.e. shifting, the received rotated set of constellations points to another reference point. The translation is advantageously such that a corner point of the translated set of received constellation points coincides with the origin of the complex plane. The bottom left corner point of the received set of constellation points then preferably coincides with the origin (0,0) of the complex plane.

In a preferred embodiment the at least one geometrical transformation comprises applying a rotation to the rotated set of constellations points at the receiver and to the received digital data symbol. The rotation may be in clockwise or counter-clockwise direction.

Advantageously, the method comprises a step of determining the spacing between lines of the geometrically transformed set of constellation points. The method then preferably further comprises a step of determining the spacing between adjacent points on a same line of the geometrically transformed set of constellation points.

In a preferred embodiment the method of the invention is applied to demodulate a received digital data symbol that belongs to a data stream encoded according to the terrestrial digital broadcasting standard DVB-T2. In that case the geometrically transformed constellation may be rotated clockwise for bits at an odd indexed bit position in the bit sequence and anti-clockwise for bits at an even indexed bit position in the bit sequence.

The present invention also relates to a processor for processing a received digital data symbol, said digital data symbol being a point of a constellation, e.g. a rotated constellation, that is transmitted over a communication channel. The processor is adapted for performing a method for demodulating a received digital data symbol according to a method as indicated above. Such a processor may be a circuit device.

The present invention furthermore relates to a computer program product for performing, when run on a computing device, a method for demodulating a received constellation according to a method as indicated above. The present invention also relates to a data carrier comprising a computer program product as described above and/or to the transmission of such a computer program product over local or wide area network.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

**Brief description of the drawings**

The invention will now be described further, by way of example, with reference to the accompanying drawings, wherein like reference numerals refer to like elements in the various figures.

Fig.1 illustrates a rotated 256-QAM constellation.
Fig.2 illustrates a BICM with SSD structure (a) of the transmitter and (b) of the receiver.
Fig.3 represents a minimum distance calculation with a rotated and stretched constellation.
Fig.4 illustrates a first step of an embodiment of a method according to the present invention, wherein the bottom-left point of the constellation diagram of Fig.4 is shifted towards the origin (0,0).
Fig.5 illustrates a second step of an embodiment of a method according to the present invention, wherein the constellation diagram of Fig.3 is rotated clock-wise for bits with an even index.
Fig.6 illustrates a second step of an embodiment of the method according to the present invention, wherein the constellation diagram of Fig.3 is rotated counter-clockwise for bits with an odd index.
Fig.7 illustrates the determination of the closest constellation points.
Fig.8 illustrates pseudo-code of an algorithm implementing an embodiment of the method of the invention.
Fig.9 represents a complexity comparison for 64-QAM.
Fig.10 represents a complexity comparison for 256-QAM.

**Detailed description of illustrative embodiments**

The present invention will be described with respect to particular embodiments and with reference to certain drawings but the invention is not limited thereto but only by the claims.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

It should be noted that the use of particular terminology when describing certain features or aspects of the invention should not be taken to imply that the terminology is being redefined herein to be restricted to include any specific characteristics of the features or aspects of the invention with which that terminology is associated.

In the description provided herein, numerous specific details are set forth. However, it is understood that embodiments of the invention may be practiced without these specific details. In other instances, well-known methods, structures and techniques have not been shown in detail in order not to obscure an understanding of this description.

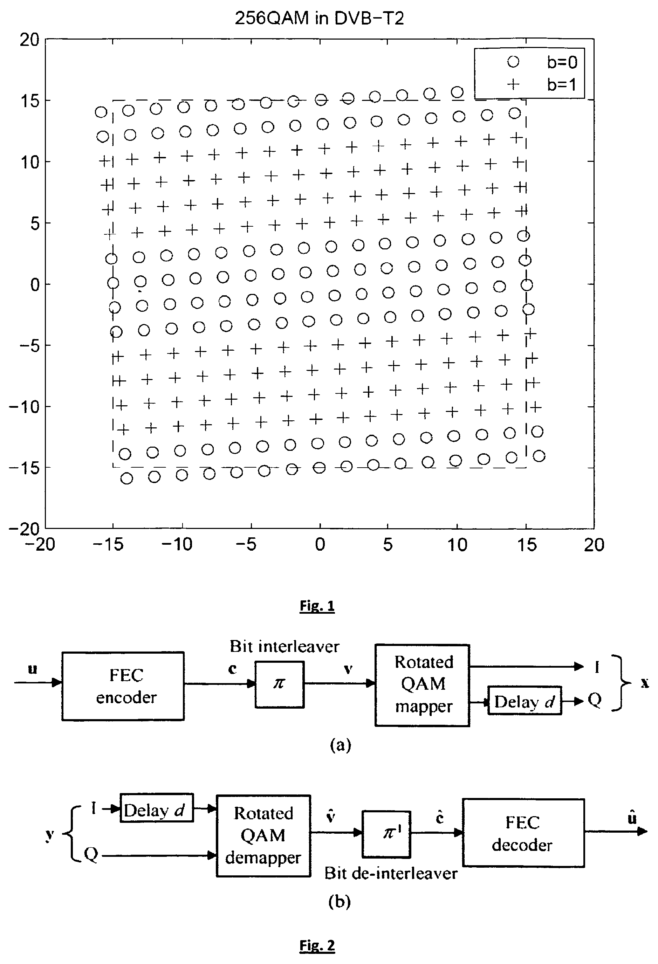

According to embodiments of the present invention, rotated constellations are targeted. An example is shown in Fig.1 for the 256-QAM mode defined in DVB-T2, where the contour of the conventional 256-QAM constellations is marked by dashed lines.

In the present invention a completely different approach is adopted as compared to the above-described prior art solutions. Specifically, a geometrical approach has been taken to tackle the soft demodulation challenge for rotated constellations. Comparing to previous schemes, this approach can achieve a substantial complexity reduction with marginal performance sacrifices.

Fig 2 shows a BICM with SSD structure (a) of the transmitter and (b) of the receiver. Considering a BICM system with a generic size-M $=2^m$ QAM modulation constellation, each segment of m coded bits, represented by $b = b_1, b_2, ..., b_m$ is first interleaved by a standard-specific interleaver n, then mapped onto predefined constellations. This produces modulated symbol $a$, which will be sent over channels with a predefined transmission scheme. On the receiver side, based on received signal r the optimal estimation of the aforementioned bit can be formulated as

$$\hat{b} = \arg \max_{b} P[b|r] \qquad (1)$$

With rotated constellations and SSD the log-likelihood ratio (LLR) of bit $b_i$ can be expressed as

$$LLR(b_i) = ln\frac{\mathcal{P}[b_i = 1|I,Q]}{\mathcal{P}[b_i = 0|I,Q]}$$

$$= ln\frac{\Sigma_{x\in\chi_i^1}e^{-\frac{(I-\rho_I I_x)^2 + (Q-\rho_Q Q_x)^2}{2\sigma^2}}}{\Sigma_{x\in\chi_i^0}e^{-\frac{(I-\rho_I I_x)^2 + (Q-\rho_Q Q_x)^2}{2\sigma^2}}}$$

$$(2)$$

where I and Q are the received I and Q branch of received signal $r(I,Q)$, respectively. $I_x$ and $Q_x$ denote the position of point x in the rotated constellation at the transmitter side. $\chi_i^1$ and $\chi_i^0$ represent the set of modulated symbols with $b_i$ being 1 and 0, respectively. The factors $\rho_I$ and $\rho_Q$ are the (real valued) amplitude fading factors associated with the *I* and *Q* branches. $\sigma^2$ denotes the noise variance. Note that *I* and *Q* branches subject to different channel conditions so that $\rho_I$ and $\rho_Q$ are diversified. Note that the positions of the possible constellation points in the constellation diagram at the receiver are obviously also affected by the amplitude fading factors $\rho_I$ and $\rho_Q$.

Using the Max-Log approximation of expression (3),

$$\ln\left(\exp(a_1) + \cdots + \exp(a_k)\right) \approx \max_{i=1\cdots k}\left(a_i\right)$$

$$(3)$$

one can derive:

$$LLR(b_i) \approx \frac{1}{2\sigma^2}\left(\min_{x\in\chi_i^0}((I - \rho_I I_x)^2 + (Q - \rho_Q Q_x)^2)\right.$$

$$\left. - \min_{x\in\chi_i^1}((I - \rho_I I_x)^2 + (Q - \rho_Q Q_x)^2)\right)$$

$$(4)$$

Equation (4) is also the form given by the implementation guideline of DVB-T2.

Starting from Equation (4), an efficient solution is derived based on theoretical interpretation and fast heuristics. When looking at Equation (4), it can be seen that the core operations are still distance calculations (5) and the searching of minimum values.

$$((I - \rho_I I_x)^2 + (Q - \rho_Q Q_x)^2) \qquad (5)$$

However, there are two differences when comparing to a conventional transmission scheme with regular QAM constellations:

a) the set of constellation points $\chi$ (or $\chi_i^0 \cup \chi_i^1$) is rotated, and

b) the distance calculation given by expression (5) involves two different channel coefficients ($\rho_I$ and $\rho_Q$) instead of one.

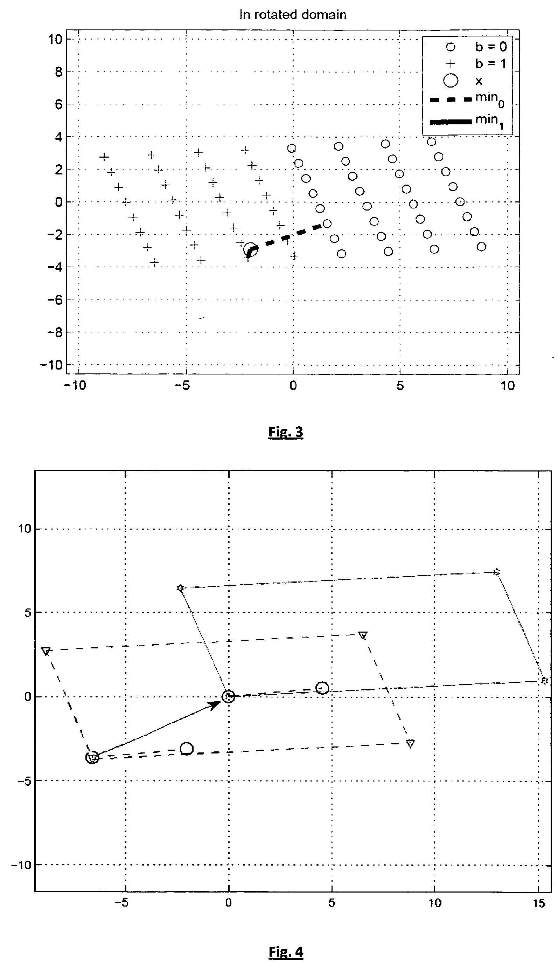

This is conceptually explained in Fig.3, where the effect of rotation and the following stretching of the rotated constellation is clearly visible. In the example shown in Fig.3, $\rho_I$ = 1.1064 and $\rho_Q$ = 0.4666, so that the contour of constellation points appears to be stretched on the horizontal direction. The two constellation points in $\chi_i^0$ and $\chi_i^1$ with minimum distances are also annotated with dashed and solid lines towards the received point, which is marked as a circle.

The motivation of the proposed method is based on the fact that simple geometrical operations, such as rotation and shifting, do not affect the distance calculations. As long as all constellation points and the received point are (conceptually) transformed in the same way, minimum distances can be calculated in a transformed graph in a much simpler way. The goal of the proposed transformation steps is to make lines of constellation points become horizontal, just as in conventional constellations. With the help of the geometrical transformations, the two minimum distance calculations can be approximated in an efficient way.

The first step is a simple shifting (or vector translation). Due to the rotation and the stretching resulting from the unbalanced $\rho_I$ and $\rho_Q$ (caused the non-ideal channel conditions), the contour of the constellation points becomes a parallelogram. Let $\overline{\chi}_i^0 (\rho_I, \rho_Q)$ and $\overline{\chi}_i^1 (\rho_I, \rho_Q)$ denote the sets of stretched constellations, with a 0 and a 1 at the bit position with index i, respectively. In Fig.4 the rotated and stretched contour of constellation points is with dashed lines. The shifting is to move the bottom-left point of the contour to (0,0), the origin of the complex plane, so that further rotations can be performed based on the reference point (0,0). The contour of shifted constellation points is drawn with solid lines in Fig.4. The shifting vector $v_s$ is a function of the specific constellation and two channel coefficients $\rho_I$ and $\rho_Q$ : $v_s = f_s(\chi, \rho_I, \rho_Q)$. Note that the received symbol (marked by a circle) is also transformed accordingly.

Let $\vartheta_\chi$ denote the rotation angle of constellation scheme $\chi$ and $m_\chi$ the number of bits. The bottom-left constellation point of $\chi$ is $\sqrt{2} \, (2^{m_\chi/2} - 1)(\cos(\tfrac{5}{4}\pi + \theta_\chi), j \sin(\tfrac{5}{4}\pi + \theta_\chi))$ After stretching by $\rho_I$ and $\rho_Q$, the bottom-left constellation point becomes $\sqrt{2} \, (2^{m_\chi/2} - 1)(\rho_I \cos(\tfrac{5}{4}\pi + \theta_\chi), j \, \rho_Q \sin(\tfrac{5}{4}\pi + \theta_\chi))$. To move the point to (0,0), the shifting vector is then $v_s = -\sqrt{2} \, (2^{m_\chi/2} - 1)(\rho_I \cos(\tfrac{5}{4}\pi + \theta_\chi), j \, \rho_Q \sin(\tfrac{5}{4}\pi + \theta_\chi))$. This is shown in Fig.4. Note that the same shifting is applied to r (the received signal) and results in r'.

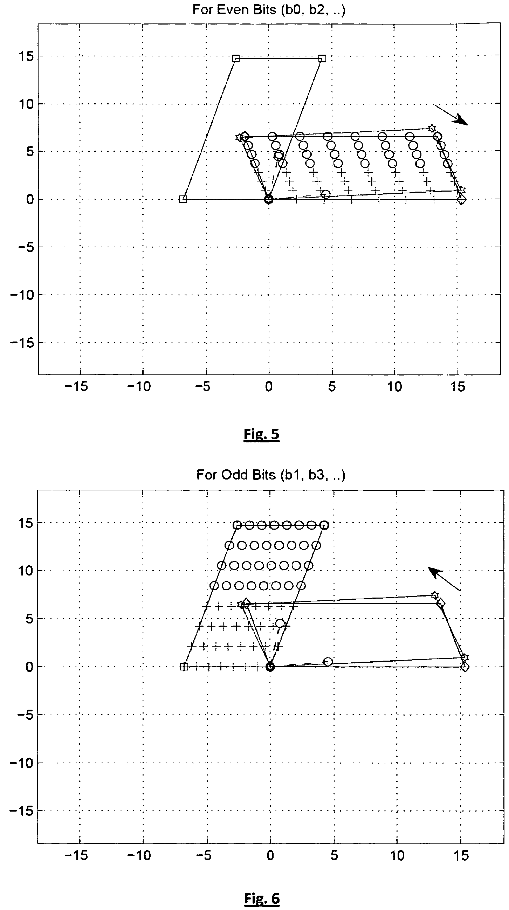

The second step is a rotation. Based on reference point (0,0), one can rotate the set of constellation points clockwise or counter-clockwise to obtain horizontal lines of constellation points. Rotating clockwise or counter-clockwise depends on the bit mapping that was applied to the information symbols. For different bit indexes, $\chi_i^0$ and $\chi_i^1$ form partitioned "bars" that are originally horizontal or vertical in the non-rotated constellation. Hence, the direction of rotation depends on the index of the bit in the bit sequence corresponding to the received signal. For instance, when working with DVB-T2, the rotation for even bits ($b_0$, $b_2$, ...) is clockwise (as shown in Fig.5). Rotation for odd bits ($b_1$, $b_3$, ...) is counter-clockwise (as shown in Fig.6). The angle of rotation, denoted by $\vartheta_r$, is a function of the specific constellation, two channel coefficients $\rho_I$ and $\rho_Q$ and bit index: $\vartheta_r = f_\vartheta(\chi, \rho_I, \rho_Q, i)$. Note that the received signal (marked by a circle) is also transformed accordingly.

Before the shifting in the first step, the bottom-right constellation point is $\xi_{br} = \sqrt{2} \, (2^{m_\chi/2} - 1)(\rho_I \cos(\tfrac{7}{4}\pi + \theta_\chi), j \, \rho_Q \sin(\tfrac{7}{4}\pi + \theta_\chi))$. With the shift vector $v_s$ the constellation point becomes

$$\xi_{br}' = \sqrt{2} \, (2^{m_\chi/2} - 1)x(\rho_I (\cos(\tfrac{7}{4}\pi + \theta_\chi) - \cos(\tfrac{5}{4}\pi + \theta_\chi)), j \, \rho_Q (\sin(\tfrac{7}{4}\pi + \theta_\chi) - \sin(\tfrac{5}{4}\pi + \theta_\chi)) \qquad (6)$$

Similarly, the top-left constellation point becomes

$$\xi_{tl}' = \sqrt{2}\ (2^{m_\chi/2} - 1)(\rho_I\,(\cos(\tfrac{3}{4}\pi + \theta_\chi) - \cos(\tfrac{5}{4}\pi + \theta_\chi)),\ j\,\rho_Q(\sin(\tfrac{3}{4}\pi + \theta_\chi) - \sin(\tfrac{5}{4}\pi + \theta_\chi)) \tag{7}$$

When rotating clockwise as in Fig.6, one has $\vartheta_r$ = -angle($\xi_{br}'$ ). When rotating anti-clockwise as in Fig.6, one has $\vartheta_r = \pi$ - angle($\xi_{tl}'$ ). $r'$ is rotated in the same way and the result is denoted $r''$. In Fig.5 and Fig.6 the rotated $r''$ is marked by a dashed line between (0, 0) and $r''$.

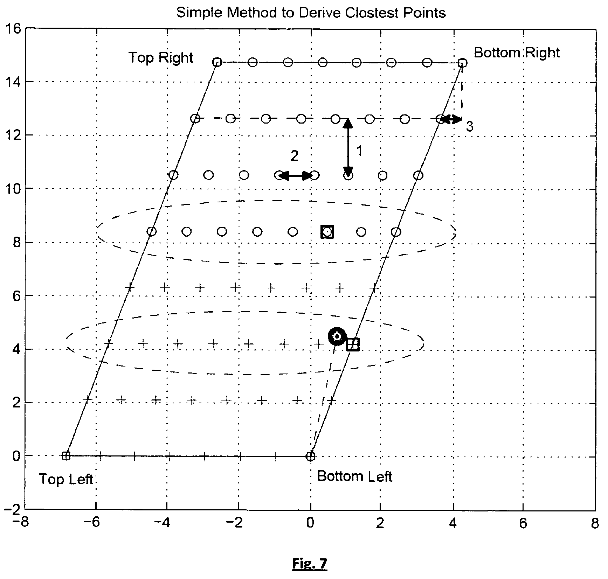

The third step is the determination of the closest constellation points, as illustrated in Fig 7. Based on the above two steps (translation and rotation) applied to all elements of $\chi_i^0$ and $\chi_i^1$ (with results being $\overline{\chi}_i^{\,''0}$ and $\overline{\chi}_i^{\,''1}$), now one has the following facts :

* $\overline{\chi}_i^{\,''0}$ and $\overline{\chi}_i^{\,''1}$ all lie on horizontal lines due to the rotation and the selected direction of rotation

* elements in $\overline{\chi}_i^{\,''0}$ and elements in $\overline{\chi}_i^{\,''1}$ never lie on the same horizontal line due to the selected direction of rotation

* different lines of constellation points are skewed in a regular way.

As mentioned before, the received signal is also transformed in the same way as other constellations points, yielding $r''$ as a result. Due to the properties mentioned above, finding the closest points in $\overline{\chi}_i^{\,''0}$ and $\overline{\chi}_i^{\,''1}$ becomes much simpler. Specifically, the following simple steps may be taken :

* Locate the closest lines of $\overline{\chi}_i^{\,''0}$ and $\overline{\chi}_i^{\,''1}$ , as marked by the ellipses in Fig.7. The signal $r''$ may then be projected onto the closest horizontal lines and a quantization of the projections to the closest constellation points may be performed, which may e.g. be implemented by using a table lookup. The derived closest points are marked by squares in Fig.7. To locate the closest lines and perform projections, it is to be noted that the following data needs to be known :

  - the regular spacing among different horizontal lines. This is denoted as $\lambda_v$ and it is indicated in Fig.7 by the vertical double-arrow 1,
  - the regular spacing among adjacent points on the same constellation line. This is denoted as $\lambda_h$ and it is indicated in Fig.7 by the horizontal double-arrow 2.
  - the regular skew among different horizontal lines. This is denoted as $\gamma$ and it is indicated in Fig.7 by the horizontal double-arrow 3.

Now the closed form equations are derived of $\lambda_v$, $\lambda_h$ and $\gamma$ for the case when rotating anti-clockwise (as in Fig.7). When rotating clockwise, the equations can be derived in a similar way.

Before the rotation with angle $\vartheta_r$, the top-right constellation point is After the rotation with angle $\vartheta_r$, the point becomes

$$\xi_{tr}' = \sqrt{2}\ (2^{m_\chi/2} - 1)(\rho_I\,(\cos(\tfrac{1}{4}\pi + \theta_\chi) - \cos(\tfrac{5}{4}\pi + \theta_\chi)),\ j\,\rho_Q(\sin(\tfrac{1}{4}\pi + \theta_\chi) - \sin(\tfrac{5}{4}\pi + \theta_\chi)) \tag{8}$$

$\xi_{tr}'' = \xi_{tr}'\,e^{j\theta_r}$ . The rotated bottom right point can be derived in the same way. Then $\lambda_v$, $\lambda_h$ and $\gamma$ can all be derived from $\xi_{tr}''$ and $\xi_{br}''$ :

$$\lambda_v \;=\; \frac{\Im(\xi_{tr}'')}{2^{m/2} - 1} \tag{9}$$

$$\lambda_h = \frac{\Re(\xi_{br}'') - \Re(\xi_{tr}'')}{2^{m/2} - 1} \quad (10)$$

$$\gamma = \frac{\Re(\xi_{br}'')}{2^{m/2} - 1} \quad (11)$$

After the derivation of $\lambda_v$, $\lambda_h$ and $\gamma$ one disposes of full information about how the constellation grid is structured. Hence, projection and quantization operation will derive closest constellation points in $\overline{\chi}_i''^0$ and $\overline{\chi}_i''^1$. Specifically, the following calculations are performed. By calculating $2\Im(r'')/\lambda_v$ one can figure out how $r''$ falls between different lines of constellation points. To locate closest lines in $\chi_i''^0$ and $\chi_i''^1$ further quantisation is performed $\lfloor 2\Im(r'')/\lambda_v \rfloor$ as well as two table lookup operations (for $\overline{\chi}_i''^0$ and $\overline{\chi}_i''^1$, respectively). The indexes of the two closest lines are denoted $k_{l,0}$ and $k_{l,0}$. By quantizing the projection of $r''$ to the closest constellation lines found above, one can derive the closest constellation points. Specifically, for $\overline{\chi}_i''^0$, calculating $\lfloor (\Re(r'') - k_{l,0}\,\gamma) / \lambda_h \rfloor$ and performing a boundary control slices the projection of $r''$ to the nearest constellation point in $\chi_i''^0$.

Since the above transformations do not affect the distances among points, after finding the closest points in $\overline{\chi}_i''^0$ and $\overline{\chi}_i''^1$ equation (4) can be easily calculated, even without knowing what geometrical transformations have been applied.

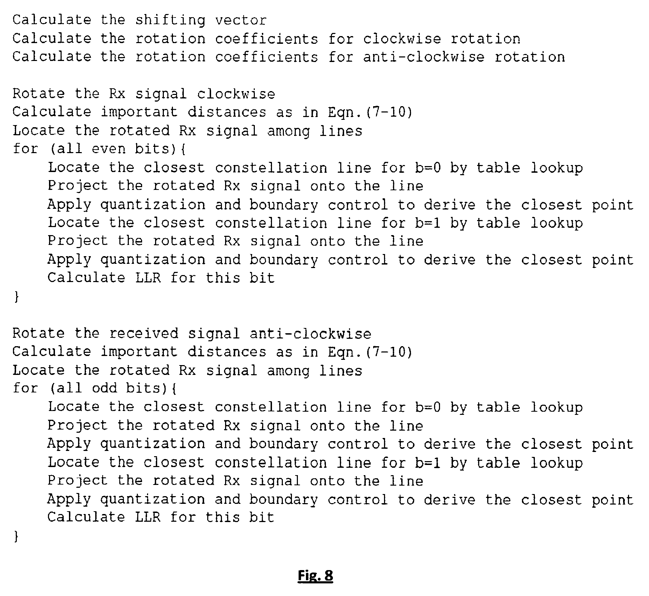

An algorithm for soft demodulation in DVB-T2 according to the method of this invention is illustrated in pseudo code in Fig.8. Note that the pseudo code illustrates the process for demodulating the entire symbol (all bits). The pseudo code is segmented by empty lines into three parts. The first part includes shared processing for a given set of $\chi$, $\rho_I$ and $\rho_Q$. The calculations only depend on $\chi$, $\rho_I$ and $\rho_Q$ but not on the index of bits or any other parameters. Hence, this part of processing is performed only once for processing all bits. The second part handles LLR calculations for all odd bits with a 'for' loop and several pre-processing steps before the 'for' loop. Output of the three pre-processing steps can be reused for all odd bits. Inside the 'for' loop, the same procedures are applied two times for b=0 and b=1, respectively. Then LLR is calculated. The second part handles LLR calculations for all odd bits with a 'for' loop and several pre-processing steps before the 'for' loop. This is similar to what has been explained before.

Although the algorithm seems to be structurally more complex than what was conceptually explained before, the optimization is important for complexity reduction. Besides the structural optimization, lower level optimizations are also applied. For instance, for the calculation of $\vartheta_r$ and $e^{i\theta r}$, one directly calculates from $\xi_{tr}'$ and $\xi_{br}'$. In this way one can avoid *sin, cos* and/or *atan* operators and reduce complexity.

As mentioned before, most prior art solutions extend the philosophy embedded in the theoretical formulation of LLR values as in Eqn.(4) and tried to reduce the search range. Hence, arithmetics involved in those solutions are very similar with the theoretical formulation. Specifically, the algorithms are mostly based on multiplications, additions and comparisons. In practice comparisons are usually also implemented on adders with a flag signal as output. However, this work takes a completely different approach and directly derives closest constellation points with geometrical transformations. This results in very different arithmetics. Besides regular arithmetic operators such as multiplication and additions, divisions, inverse square root operations and table look up are required. These extra operations are known to be more complex. Fortunately, the number of required divisions, inverse square root operations and table look up operations is orders of magnitude lower when compared to multiplications and additions. This indicates that software based low cost implementations, such as Newton-Raphson method, will be enough.

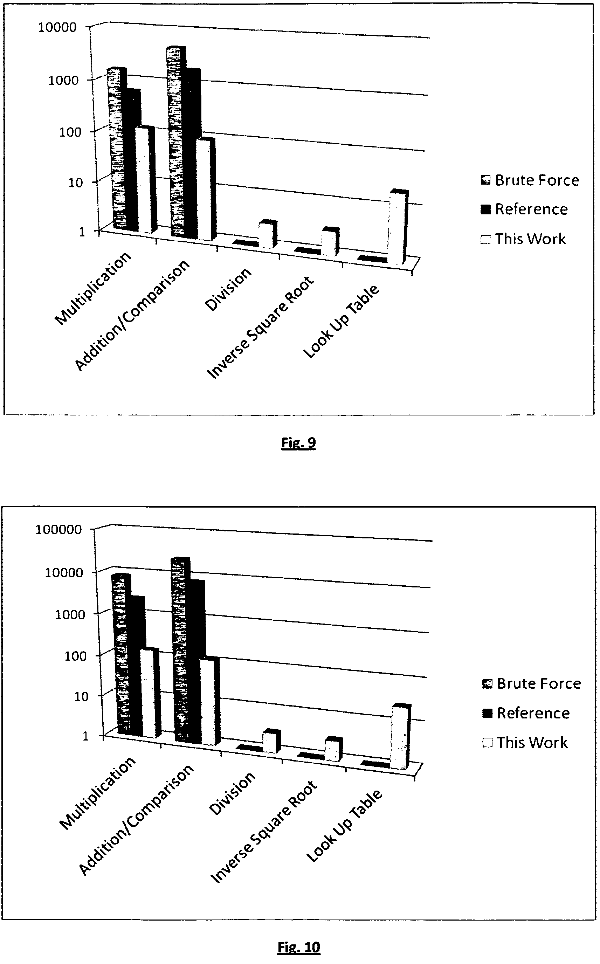

Since small constellations, such as QPSK, impose limited challenges for soft demodulation, 64QAM and 256QAM are considered. In Fig.9 and Fig.10, a complexity comparison is shown for 64QAM and 256QAM, respectively. A comparison is made to the brute force search based on Eqn.(4) (marked as 'Brute Force') and the method proposed in the above-mentioned paper by Meng Li (marked as 'Reference'). Note that Y-axis is logarithmic scale. Quantization operations are lumped into additions.

First of all, one can see that the overall reduction complexity reduction rate is very high. The method in the Li paper reduces about 60% operations for 64QAM and 69% operations for 256QAM, whereas the proposed method achieves orders of magnitude of improvement for both multiplications and additions.

Second, the number of complex operators is orders of magnitudes lower than the number of multiplications and additions. Hence, it is not necessary to support these operators with dedicated hardware. Software based implementation of these operators will be a low cost solution and will not be the bottleneck of the implementation.

Third, the complexity function of the proposed method is friendly with large constellations. Specifically, the complexity of searching based method for 256QAM is substantially higher than that for 64QAM. However, when comparing Fig.7 and Fig.8 one can see that the proposed method only increases slightly. When looking into Fig.6, one can see that the algorithm has a linear complexity function of the number of bits but not the number of constellation points. Hence, when the number of bits grows from 6 to 8, complexity increment is very limited. When considering future constellations such as 4096QAM, the proposed method scales much better. This is a strong advantage compared to previous work.

While the invention has been illustrated and described in detail in the drawings and foregoing description, such illustration and description are to be considered illustrative or exemplary and not restrictive. The foregoing description details certain embodiments of the invention. It will be appreciated, however, that no matter how detailed the foregoing appears in text, the invention may be practiced in many ways. The invention is not limited to the disclosed embodiments.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

**Claims**

1. Method for demodulating in a receiver a received data symbol, said data symbol represented by a sequence of bits and selected for Signal Space Diversity, SSD, transmission over a communication channel from a set of constellation points rotated with respect to the complex plane axes, **characterised by** a step of determining a closest constellation point to said received data symbol, whereby said step comprises for a bit of said sequence

   - performing a rotation on a set of candidate constellation points in said receiver, said set of candidate constellation points having a corner point coinciding with the complex plane origin, whereby the rotation direction and rotation angle are determined by the index of said bit in said bit sequence, the rotation angle being so that said candidate constellation points fall onto horizontal lines in the complex plane,
   - performing said rotation also on said received data symbol, and
   - deriving said closest constellation point from the rotated candidate constellation points and rotated received data symbol.

2. Method for demodulating as in claim 1, further comprising a step of performing a translation operation on said set of candidate constellation points so that said corner point coinciding with the complex plane origin is achieved and performing said translation operation also on said received data symbol.

3. Method for demodulating as in claim 1 or 2, whereby a first closest point is derived having a logical zero at said index in the bit sequence and a second closest point having a logical one at said index.

4. Method for demodulating as in any of claims 1 to 3, wherein deriving said closest constellation point comprises a step of determining the spacing between adjacent horizontal lines.

5. Method for demodulating as in any of the previous claims, wherein deriving said closest constellation point comprises a step of determining the spacing between adjacent points on a same horizontal line.

6. Method for demodulating as in any of the previous claims, wherein deriving said closest constellation point comprises a step of determining the skew among two of said horizontal lines.

7. Method for demodulating as in any of the previous claims, wherein said step of determining comprises a geometrical projection.

8. Method for demodulating as in any of the previous claims, wherein the bottom left corner point of said set of candidate constellation points in said receiver coincides with the origin of the complex plane.

9. Method for demodulating as in any of the previous claims, wherein said received digital data symbol is part of a data stream according to the DVB-T2 standard.

10. A program, executable on a programmable device containing instructions, which, when executed, perform the method as in any of the claims 1 to 9.

11. Processor device arranged for performing the method as in any of the claims 1 to 9 in the receiver.

**Patentansprüche**

1. Verfahren zur Demodulation eines empfangenen Datensymbols in einem Empfänger, wobei das Datensymbol dargestellt wird durch eine Folge von Bits und ausgewählt wird für Signalraumdiversitäts-SSD-Übertragung über einen Kommunikationskanal von einer Gruppe von Konstellationspunkten, die in Bezug auf die Achsen komplexer Ebenen gedreht sind, **gekennzeichnet durch** einen Schritt des Bestimmens eines dem empfangenen Datensymbol nächstgelegenen Konstellationspunkts, wobei der Schritt für ein Bit der Folge Folgendes umfasst:

- Durchführen einer Drehung an einer Gruppe von Anwärterkonstellationspunkten, die einen Eckpunkt aufweisen, der mit dem Ursprung der komplexen Ebene zusammenfällt, wobei die Drehrichtung und der Drehwinkel bestimmt werden **durch** den Index des Bits in der Bitfolge, wobei der Drehwinkel so ist, dass die Anwärterkonstellationspunkte auf horizontale Linien in der komplexen Ebene fallen,
- Durchführen der Drehung auch an dem empfangenen Datensymbol, und
- Ableiten des nächstgelegenen Konstellationspunkts von den gedrehten Anwärterkonstellationspunkten und dem gedrehten empfangenen Datensymbol.

2. Verfahren zur Demodulation nach Anspruch 1, ferner umfassend einen Schritt des Durchführens eines Verschiebungsvorgangs an der Gruppe von Anwärterkonstellationspunkten, so dass der Eckpunkt, der mit dem Ursprung der komplexen Ebene zusammenfällt, erreicht wird, und des Durchführens des Verschiebungsvorgangs auch an dem empfangenen Datensymbol.

3. Verfahren zur Demodulation nach Anspruch 1 oder 2, wobei ein erster nächstgelegener Punkt mit einer logischen Null am Index in der Bitfolge und ein zweiter nächstgelegener Punkt mit einer logischen Eins am Index abgeleitet werden.

4. Verfahren zur Demodulation nach einem der Ansprüche 1 bis 3, wobei das Ableiten des nächstgelegenen Konstellationspunkts einen Schritt des Bestimmens des Abstands zwischen nebeneinander liegenden horizontalen Linien umfasst.

5. Verfahren zur Demodulation nach einem der vorhergehenden Ansprüche, wobei das Ableiten des nächstgelegenen Konstellationspunkts einen Schritt des Bestimmens des Abstands zwischen nebeneinander liegenden Punkten auf einer gleichen horizontalen Linie umfasst.

6. Verfahren zur Demodulation nach einem der vorhergehenden Ansprüche, wobei das Ableiten des nächstgelegenen Konstellationspunkts einen Schritt des Bestimmens des Versatzes von zwei der horizontalen Linien umfasst.

7. Verfahren zur Demodulation nach einem der vorhergehenden Ansprüche, wobei der Schritt des Bestimmens eine geometrische Projektion umfasst.

8. Verfahren zur Demodulation nach einem der vorhergehenden Ansprüche, wobei der untere linke Eckpunkt der Gruppe von Anwärterkonstellationspunkten in dem Empfänger mit dem Ursprung der komplexen Ebene zusammenfällt.

9. Verfahren zur Demodulation nach einem der vorhergehenden Ansprüche, wobei das empfangene digitale Datensymbol Teil eines Datenstroms gemäß dem DVB-T2-Standard ist.

**10.** Programm, das auf einer programmierbaren Vorrichtung ausführbar ist, die Befehle enthält, die bei Ausführung das Verfahren nach einem der Ansprüche 1 bis 9 durchführen.

**11.** Prozessorvorrichtung, die zum Durchführen des Verfahrens nach einem der Ansprüche 1 bis 9 im Empfänger angeordnet ist.

**Revendications**

**1.** Procédé de démodulation, dans un récepteur, d'un symbole de données reçu, ledit symbole de données étant représenté par une séquence de bits et étant sélectionné pour une émission à diversité d'espace de signal, SSD, sur un canal de communication à partir d'un ensemble de points de constellation tournés par rapport aux axes de plan complexe, **caractérisé par** une étape de détermination d'un point de constellation le plus proche dudit symbole de données reçu, dans lequel ladite étape comprend, pour un bit de ladite séquence :

- l'exécution d'une rotation sur un ensemble de points de constellation candidats dans ledit récepteur, ledit ensemble de points de constellation candidats comportant un point de coin coïncidant avec l'origine de plan complexe, dans lequel le sens de rotation et l'angle de rotation sont déterminés par l'indice dudit bit dans ladite séquence de bits, l'angle de rotation étant tel que lesdits points de constellation candidats tombent sur des lignes horizontales dans le plan complexe,
- l'exécution de ladite rotation également sur ledit symbole de données reçu, et
- la dérivation dudit point de constellation le plus proche à partir des points de constellation candidats tournés et du symbole de données reçu tourné.

**2.** Procédé de démodulation selon la revendication 1, comprenant en outre une étape d'exécution d'une opération de translation sur ledit ensemble de points de constellation candidats de sorte que ledit point de coin coïncidant avec l'origine de plan complexe soit obtenu et d'exécution de ladite opération de translation également sur ledit symbole de données reçu.

**3.** Procédé de démodulation selon la revendication 1 ou 2, dans lequel il est dérivé un premier point le plus proche ayant un zéro logique au dit indice dans la séquence de bits et un deuxième point le plus proche ayant un un logique au dit indice.

**4.** Procédé de démodulation selon l'une quelconque des revendications 1 à 3, dans lequel la dérivation dudit point de constellation le plus proche comprend une étape de détermination de l'espacement entre des lignes horizontales adjacentes.

**5.** Procédé de démodulation selon l'une quelconque des revendications précédentes, dans lequel la dérivation dudit point de constellation le plus proche comprend une étape de détermination de l'espacement entre des points adjacents sur une même ligne horizontale.

**6.** Procédé de démodulation selon l'une quelconque des revendications précédentes, dans lequel la dérivation dudit point de constellation le plus proche comprend une étape de détermination de l'inclinaison parmi deux desdites lignes horizontales.

**7.** Procédé de démodulation selon l'une quelconque des revendications précédentes, dans lequel ladite étape de détermination comprend une projection géométrique.

**8.** Procédé de démodulation selon l'une quelconque des revendications précédentes, dans lequel le point de coin inférieur gauche dudit ensemble de points de constellation candidats dans ledit récepteur coïncide avec l'origine du plan complexe.

**9.** Procédé de démodulation selon l'une quelconque des revendications précédentes, dans lequel ledit symbole de données numériques reçu fait partie d'un flux de données selon la norme DVB-T2.

**10.** Programme, exécutable sur un dispositif programmable contenant des instructions, qui, lorsqu'il est exécuté, effectue le procédé selon l'une quelconque des revendications 1 à 9.

11. Dispositif processeur agencé pour effectuer le procédé selon l'une quelconque des revendications 1 à 9 dans le récepteur.

## 256QAM in DVB-T2

**Fig. 1**

(a)

(b)

**Fig. 2**

In rotated domain

**Fig. 3**

**Fig. 4**

For Even Bits (b0, b2, ..)

**Fig. 5**

For Odd Bits (b1, b3, ..)

**Fig. 6**

Fig. 7

```
Calculate the shifting vector
Calculate the rotation coefficients for clockwise rotation
Calculate the rotation coefficients for anti-clockwise rotation

Rotate the Rx signal clockwise
Calculate important distances as in Eqn.(7-10)
Locate the rotated Rx signal among lines
for (all even bits){
    Locate the closest constellation line for b=0 by table lookup
    Project the rotated Rx signal onto the line
    Apply quantization and boundary control to derive the closest point
    Locate the closest constellation line for b=1 by table lookup
    Project the rotated Rx signal onto the line
    Apply quantization and boundary control to derive the closest point
    Calculate LLR for this bit
}

Rotate the received signal anti-clockwise
Calculate important distances as in Eqn.(7-10)
Locate the rotated Rx signal among lines
for (all odd bits){
    Locate the closest constellation line for b=0 by table lookup
    Project the rotated Rx signal onto the line
    Apply quantization and boundary control to derive the closest point
    Locate the closest constellation line for b=1 by table lookup
    Project the rotated Rx signal onto the line
    Apply quantization and boundary control to derive the closest point
    Calculate LLR for this bit
}
```

**Fig. 8**

**Fig. 9**

**Fig. 10**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **MENG LI et al.** Design of rotated QAM mapper/demapper for the DVB-T2 standard. *IEEE Workshop on Signal Processing Systems,* 2009, 018-023

- **KYEONGYEON KIM et al.** *IEEE Consumer Communication and Networking Conference,* 20 January 2012, vol. 12, 787-791